# EUROPÄISCHE PATENTSCHRIFT

(11) **EP 1 449 707 B1**
(45) Veröffentlichungstag und Bekanntmachung des Hinweises auf die Patenterteilung: **26.07.2006**
(21) Anmeldenummer: 04000691.8
(22) Anmeldetag: 15.01.2004
(51) Int. Cl.: B60W 10/02, B60W 10/10, F16D 25/12

(54) **Verfahren zur Steuerung der Kühlmittelzufuhr einer Kupplung eines Kraftfahrzeuges**
Method of controlling the cooling medium supply of a motor vehicle clutch
Procedé pour contrôler l'alimentation d'un fluide de refroidissement d'un embrayage pour automobile

(30) Priorität: 18.02.2003 DE 10306895
(43) Veröffentlichungstag der Anmeldung: 25.08.2004
(73) Patentinhaber: Volkswagen Aktiengesellschaft, 38436 Wolfsburg (DE)
(72) Erfinder: Rudolph, Falko, 38108 Braunschweig (DE); Götte, Timo, Dr., 38518 Gifhorn (DE); Steinberg, Ingo, Dr., 38547 Calberlah (DE)

(56) Entgegenhaltungen:
- DE-A- 4 136 583
- DE-A- 10 148 424
- US-A1- 2002 094 910
- PATENT ABSTRACTS OF JAPAN Bd. 1996, Nr. 02, 29. Februar 1996 (1996-02-29) & JP 7 259895 A (NISSAN DIESEL MOTOR CO LTD), 9. Oktober 1995 (1995-10-09)

## Beschreibung

Die Erfindung betrifft ein Verfahren zur Steuerung der Kühlmittelzufuhr einer Kupplung eines Kraftfahrzeuges mit einem automatischen Schaltgetriebe, insbesondere zur Steuerung der Kühlmittelzufuhr einer Doppelkupplung eines automatischen Doppelkupplungsgetriebes, wobei der der Kupplung zugeführte Kühlmittelvolumenstrom in Abhängigkeit der Temperatur des Kühlmittels gesteuert wird.

Im Stand der Technik sind mehrere Verfahren zur Steuerung der Kühlmittelzufuhr einer Kupplung eines Kraftfahrzeugs bekannt. Insbesondere benötigen nasslaufende Kupplungen, die als Reibkupplungen ausgeführt sind, insbesondere Doppelkupplungen bei automatischen Doppelkupplungsgetrieben eine aktive Steuerung der Kühlmittelzufuhr zur Kupplung. Hierzu können entsprechende Steuerventile, insbesondere als Magnetventile ausgeführte Steuerventile und entsprechende Steuereinheiten vorgesehen werden. Auch Strahl- und/oder Einspritzpumpen bzw. temperaturgesteuerte Steuerventile können zur Gewährleistung der Fluidversorgung der Kupplung mit dem entsprechenden Kühlmittel entsprechend vorgesehen werden.

So wird in der DE 198 48 935 A1 bei einem Automatgetriebe für Fahrzeuge mit einem hydrodynamischen Wandler vorgeschlagen, dass der Reibkupplung während der Schlupfphase eine erhöhte Menge Kühlöl zugeführt wird, so dass bei einem minimalen Kühlöldurchsatz immer eine ausreichende Kühlung der Reibkupplung während des Schlupfbetriebs gewährleistet ist.

Weiterhin offenbart die DE 198 51 384 A1 eine Überbrückungskupplung zwischen einer Antriebswelle und einer Abtriebswelle, wobei die Überbrückungskupplung von einem Kühlmittelvolumenstrom durchflossen wird. Hier wird vorgeschlagen, dass der Kühlölstrom in Abhängigkeit von der Temperatur gesteuert wird, wobei dadurch erreicht wird, dass immer eine Übertragungsfähigkeit der als Überbrückungskupplung ausgeführten Kupplung in geschlossenem Zustand gewährleistet ist und zu gegebener Zeit immer ein höherer Kühlmittelvolumenstrom bereitgestellt werden kann.

Aus der DE-101 48 424 A1 ist ein Verfahren nach dem Oberbegriff des Anspruchs 1 bekannt.

Schließlich ist aus der DE 100 20 187 A1 ein für ein Doppelkupplungsgetriebe beschriebenes Verfahren bekannt, wobei eine hydraulische Schaltung vorgesehen ist, die entsprechende Komponenten wie Strahlpumpen und mehrere Hydraulikkreise - sowie temperaturgesteuerte Schaltventile aufweist, die - im Endeffekt - die Kühlung der Kupplungen gewährleistet.

Die im Stand der Technik bekannten Verfahren zur Steuerung der Kühlmittelzufuhr einer Kupplung eines Kraftfahrzeugs mit einem automatischen Schaltgetriebe sind bisher noch nicht optimal ausgebildet. Insbesondere bei nasslaufenden Kupplungen, insbesondere einer Doppelkupplung bei einem Doppelkupplungsgetriebe können die Schleppdrehmomente der Doppelkupplung das Einlegen von Gängen innerhalb des Doppelkupplungsgetriebes behindern. Dies kann insbesondere bei niedrigen bzw. sehr niedrigen Temperaturen auftreten, da hier Schleppdrehmomente entstehen, die aus der hohen Kühlölviskosität resultieren. Anders ausgedrückt, aufgrund der hohen Viskosität des bei niedrigen Temperaturen sehr zähflüssigen Kühlmittels kann bei ausreichender Synchronkapazität der Gangsynchronisierungen zwar möglicherweise der Zielgang noch ansynchronisiert werden, aber ein Durchschalten der Schiebemuffe und somit das entscheidende Einlegen des jeweiligen Ganges wird behindert. Insbesondere bei Betriebstemperaturen des Kühlmittels von weniger als 20° C können die oben beschriebenen Schleppdrehmomente und deren entsprechende Auswirkungen auftreten. Die bekannten Verfahren sind daher noch nicht optimal.

Der Erfindung liegt daher die Aufgabe zugrunde, das eingangs genannte Verfahren derart auszugestalten und weiterzubilden, dass insbesondere bei niedrigen Temperaturen die Entstehung der entsprechenden Schleppdrehmomente verringert bzw. verhindert sind.

Die zuvor aufgezeigte Aufgabe ist nun durch die Merkmale des Anspruchs 1 gelöst.

Temperaturen ein zuverlässiges Einlegen der Gänge innerhalb des Getriebes zu gewährleisten. Insbesondere bei sehr tiefen Temperaturen werden die Schaltabläufe bzw. die Kühlmittelzufuhr so gesteuert, dass sich nur sehr wenig Kühlmittel innerhalb der Kupplung, insbesondere einer Doppelkupplung befindet. Insbesondere das Abschleudern des zähflüssigen Kühlmittel, insbesondere Kühlöles bei niedrigen Temperaturen würde lange dauern und würde zu unzulässig langen Schaltzeiten und einer hohen Beanspruchung der Synchronisierungen führen. Dies ist durch das erfindungsgemäße Verfahren verhindert. Von besonderen Vorteil ist hier die zeitweise Unterbrechung der Kühlmittelzufuhr zur Kupplung, was entscheidende Vorteile mit sich bringt. Dies soll im folgenden noch näher erörtert werden.

Im folgenden soll nun ein bevorzugtes Ausführungsbeispiel der Erfindung anhand der folgenden Zeichnung und der dazugehörenden Beschreibung näher erläutert werden. In der Zeichnung zeigt
- Fig. 1: eine graphische, schematische Darstellung des Kühlölvolumenstromes über die Zeit für die Doppelkupplung eines Doppelkupplungsgetriebes,
- Fig. 2a - 2d: in tabellarischer Form für verschiedene Betriebszustände des Getriebes mit angegebenen Zeitintervallen die entsprechende Unterbrechung der Kühlmittelzufuhr.

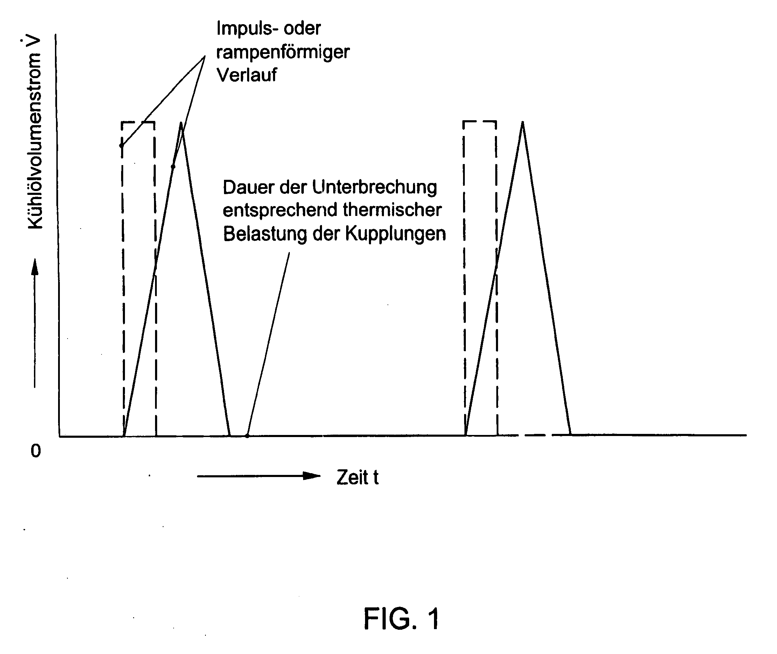

Die Fig. 1 zeigt - zumindest teilweise - das Verfahren zur Steuerung der Kühlmittelzufuhr einer Kupplung eines Kraftfahrzeuges mit einem automatischen Schaltgetriebe. Vzw. wird das hier geschilderte erfindungsgemäße Verfahren zur Steuerung der Kühlmittelzufuhr einer Doppelkupplung eines automatischen Doppelkupplungsgetriebes verwendet. Die Doppelkupplung bzw. das automatische Doppelkupplungsgetriebe sowie das Kraftfahrzeug sind hier nicht explizit dargestellt. Wie bereits eingangs erwähnt, wird der der Kupplung zugeführte Kühlmittelvolumenstrom in Abhängigkeit der Temperatur des Kühlmittels gesteuert.

Die oben beschriebenen Nachteile werden nun dadurch vermieden, dass die aktuelle Temperatur T des Kühlmittels gemessen wird und dass in Abhängigkeit bestimmter, innerhalb des Schaltgetriebes durchzuführender Schaltabläufe und in Abhängigkeit der aktuell gemessenen Temperatur T des Kühlmittels die Kühlmittelzufuhr V zur Kupplung zumindest zeitweise unterbrochen wird. Das erfindungsgemäße Verfahren beinhaltet daher eine Kühlmittelzufuhr-Strategie im wesentlichen für alle Betriebszustände eines Doppelkupplungsgetriebes, insbesondere also auch für den Betriebszustand "P" (Parken), "R" (Rückwärts), "N" (Neutral), "D" (Drive/Fahrzustand) und "Kriechen und Anfahren" sowie "Schalten". Die Kühlmittelzufuhr wird nun zeitweise unterbrochen. Im Gegensatz zum Stand der Technik, wo die Kühlmittelzufuhr zu gegebener Zeit zwar minimiert wird, wird nunmehr - gemäß dem erfindungsgemäßen Verfahren - die Kühlmittelzufuhr im wesentlichen vollständig zeitweise unterbrochen. Hierdurch wird erreicht, dass insbesondere bei sehr tiefen Temperaturen sich nur sehr wenig Kühlmittel innerhalb der Doppelkupplung befindet. Folglich muß das dann zähflüssige Kühlmittel auch nicht lange "abgeschleudert" werden, so dass unzulässig lange Schaltzeiten und die hohe Beanspruchung der Synchronisierungen vermieden ist, da im wesentlichen die bisher bekannten Schleppdrehmomente dann eben nicht bzw. nur noch gering auftreten. Die zumindest zeitweise Unterbrechung der Kühlmittelzufuhr zur Kupplung erscheint auch zunächst mal abwegig, das ja grundsätzlich immer die Kupplung in dem entsprechenden Betriebszustand entsprechend gekühlt werden muß. Mit dem erfindungsgemäßen Verfahren wird daher eine ganz andere Kühlmittel-Strategie, insbesondere bei Betriebstemperaturen für das Kühlmittel von weniger als 20° C für die Kühlung der Kupplung realisiert, als bisher im Stand der Technik bekannt.

Insbesondere wird die Kühlmittelzufuhr nunmehr bei bestimmten Gangsynchronisierungen zeitweise unterbrochen. Dies hat den Vorteil, dass hier dann die Schleppdrehmomente vermieden sind und die entsprechenden Gänge im Getriebe eingelegt werden können, also die entsprechenden Schaltabläufe problemlos durchgeführt, nämlich die Schiebemuffen entsprechend eingerückt werden können. Als Kühlmittel wird vzw. ein Kühlöl verwendet, das in die Kupplung eingespritzt wird. Zur Realisierung bzw. Steuerung der Kühlmittelzufuhr ist eine entsprechende Kühlmittel-Steuereinheit, die hier nicht dargestellt ist, vorgesehen. Weiterhin kann alternativ auch mindestens ein Einspritzventil und/oder eine Einspritzpumpe vorgesehen sein. Es kommen auch durchaus entsprechende als Magnetventile ausgebildete Steuerventile infrage, allerdings muß ein schnelles Schließen bzw. Öffnen des entsprechenden Steuerventiles gewährleistet sein, um zumindest eine zeitweise Unterbrechung der Kühlmittelzufuhr zu realisieren.

Die entsprechenden "Hardware-Komponenten" zur Durchführung des erfindungsgemäßen Verfahrens sind hier nicht im einzelnen dargestellt, im wesentlichen aber bekannt. So kann die Kühlmittel-Steuereinheit entsprechende elektrische/elektronische Baueinheiten, insbesondere einen Mikroprozessor aufweisen bzw. die Kühlmittel-Steuereinheit in dem Getriebesteuergerät oder einem anderen Steuergerät, das die entsprechenden Fahrzustände/Schaltabläufe des Kraftfahrzeugs steuert, vorgesehen sein. Dies bedeutet, dass das erfindungsgemäße Verfahren, vorausgesetzt, es ist zur Kühlung der Kupplung eine Einspritzpumpe und/oder ein Einspritzventil vorhanden, mit bereits ohnehin im Kraftfahrzeug vorgesehenen Komponenten durchaus realisiert werden kann. Dies ist besonders kostengünstig.

Die Temperatur T des Kühlmittels wird vzw. vor der Kühlmittelzufuhr zur Kupplung gemessen. Hierzu kann ein Temperatursensor vorgesehen sein. Es wird insbesondere mit Hilfe der Kühlmittel-Steuereinheit also bspw. zusätzlich ermittelt, bevor das Kühlmittel in die Kupplung eintritt, wie der Grad/Höhe der Viskosität des Kühlmittels in diesem Moment genau ist. In Abhängigkeit der entsprechenden innerhalb des Schaltgetriebes durchzuführenden Schaltabläufe und in Abhängigkeit der aktuell gemessenen Temperatur T des Kühlmittels kann die Kühlmittelzufuhr zur Kupplung zeitweise unterbrochen werden.

Erfindungsgemäß ist ein sogenannter Kühlmittelmodulator vorgesehen, wobei die Kühlmittelzufuhr über die Bestromung des Kühlmittelmodulators realisiert wird, also über die Bestromung die entsprechenden Steuerabläufe des Einspritzventiles und/oder der Einspritzpumpe die Kühlmittelzufuhr zur Kupplung realisiert wird.

Fig. 1 zeigt nun über die Zeit t den Kühlölvolumenstrom V, also den Kühlmittelvolumenstrom für die Doppelkupplung eines Doppelkupplungsgetriebes bei einer im wesentlichen niedrigen Temperatur T. Es ist gut zu erkennen, dass der Kühlmittelvolumenstrom V zur Kühlung der hier nasslaufenden Doppelkupplung zeitweise vollständig unterbrochen wird.

Es gibt nun mehrere Möglichkeiten, wie die Bestromung des Kühlmittelmodulators erfolgt. In Fig. 1 dargestellt, ist die entsprechende Auswirkung des Kühlölvolumenstromes V bei einer rampenförmigen Bestromung des Kühlmittelmodulators, die hier mit durchgezogener Linie dargestellt ist und alternativ eine impulsförmige Bestromung des Kühlmittelmodulators, die hier in gestrichelter Linie dargestellt ist. In Folge der entsprechenden Bestromung des Kühlmittelmodulators kommt es zu den entsprechenden Verläufen des Kühlölvolumenstromes V über die Zeit t. Dies ist abhängig von der jeweiligen Ausführungsform bzw. Bestromung des Kühlmittelmodulators. Entscheidend ist, dass zwischen den hier dargestellten Impulsen bzw. den dreieckförmigen Rampen jeweils ein bestimmter Zeitraum liegt, in der kein Volumenstrom V der Doppelkupplung zugeführt wird.

Aufgrund dieser Kühlmittelzufuhr-Strategie, gemäß dem erfindungsgemäßen Verfahren, werden die eingangs beschriebenen Nachteile vermieden. Maßgeblich für die Kühlmittelversorgung bei entsprechender "festgelegter Hardware", also entsprechenden vorgesehenen Komponenten des Steuersystems ist im wesentlichen die Bestromung des Kühlölmodulators, die derart erfolgt, dass die Kühlmittelzufuhr zeitweise unterbrochen wird.

Fig. 1 zeigt die entsprechenden Kühlmittelrampen, hier Kühlölrampen, da als Kühlmittel Kühlöl verwendet bzw. eingespritzt wird. Die Größe des Intervalls, also der bestimmten Zeitspanne, in der die Kühlmittelzufuhr unterbrochen ist, richtet sich im wesentlichen nach der thermischen Beanspruchung der Kupplungen. Die thermische Beanspruchung der Kupplungen ist wiederum abhängig von dem jeweiligen Fahrzustand des Kraftfahrzeugs und den im Doppelkupplungsgetriebe realisierten bzw. dann zu realisierenden Schaltabläufen.

So ist bei Anfahrten des Kraftfahrzeuges dieses Zeitintervall, in der kein Kühlmittel eingespritzt wird, im wesentlichen kurz, um ein Trockenlaufen der Doppelkupplung zu vermeiden, um nämlich eine Beschädigung auszuschließen. In den Fahrzuständen "P" und "N" sind diese Zeitintervalle der Unterbrechung der Kühlmittelzufuhr länger, um ein schnelles Einlegen des jeweiligen Zielganges, bspw. beim Wechsel zwischen dem Fahrzustand "R" und "D" zu gewährleisten. Die Zuführung des Kühlmittels erfolgt vzw. über derartig in der Fig. 1 dargestellte "Stromrampen", um ein schlagartige Einschalten der Kupplung bzw. der Doppelkupplung, also des "Ölverbrauchers" und damit ein zeitgleiches starkes Absinken des Hauptdruckes zu vermeiden.

Als zusätzliche bevorzugte Ausführungsform kann das Kühlmittel bei sehr niedrigen Temperaturen vorgeheizt werden. Die Kupplung, vzw. die Doppelkupplung ist als nasslaufende Reibkupplung ausgeführt, wobei die Kupplung dann kurzzeitig im trockenem Betrieb gefahren wird. Insbesondere im Betriebszustand "Schalten, Gang einlegen" kann kurzfristig Kühlmittel in die Kupplung eingespritzt werden, um eine mögliche Relativbewegung der Getriebeeingangswelle zum entsprechenden Kupplungselement zu realisieren. Dies hat den Vorteil, dass aufgrund der dann möglichen Relativbewegung die einzelnen Zähne bzw. Zahnlücken der einzurückenden Schiebemuffen besonders gut mit der Kupplungsverzahnung am Losrad in Eingriff gebracht werden können.

In Abhängigkeit der realisierten Kühlmittelzufuhr-Strategie ist die Bestromung des Kühlmittelmodulators unterschiedlich, liegt aber im wesentlichen im Bereich von 0 bis 1.200 mA. Bspw. liegt eine Kühlmittelrampe von 500 bis 1200 mA vzw. im Bereich von 0,5 s bis 1,5 s. Bei der zu realisierenden Kühlmittelzufuhr-Strategie werden im wesentlichen die Fahrzustände "Anfahren" und "Kriechen" gleich behandelt. Ein Anfahrvorgang beginnt, falls der PWG seinen Schwellwert um 1,5% überschreitet und der Anfahrvorgang endet im wesentlichen mit Erreichen des Synchronpunktes. In Abhängigkeit der jeweiligen Temperatur T des Kühlmittels und des jeweiligen Fahrzustandes des Kraftfahrzeuges kann mit Hilfe des erfindungsgemäßen Verfahrens eine entsprechende Kühlmittelzufuhr-Strategie entsprechend realisiert bzw. gesteuert werden, wobei vzw. die Kühlmittelzufuhr bei einer Temperatur T von weniger als 20° C beim Wechsel des Fahrzustandes von "P" nach "N" entsprechend zeitweise unterbrochen wird. Vzw. wird dies bei einer Motordrehzahl von weniger als 2500 Umdrehungen pro Minute realisiert. Insbesondere bei dem Vorwählen von Gängen bei einem Doppelkupplungsgetriebe und bei der Einfach-Schaltung bzw. den Mehrfach-Rückschaltungen kann die Kühlmittelzufuhr im wesentlichen bei Temperaturen von geringer als 10° C unterbrochen werden. Versuche haben gezeigt, dass bei Temperaturen für das Kühlmittel von vzw. < -10° C für die Fahrzustände "Anfahren", "Kriechen" oder "Hill-Hold" fortlaufende Kühlmittelrampen (1200 ma / 500 ma / 0,5 S) mit entsprechender Unterbrechung der Kühlmittelzufuhr realisiert werden bis eben der Synchronpunkt erreicht ist.

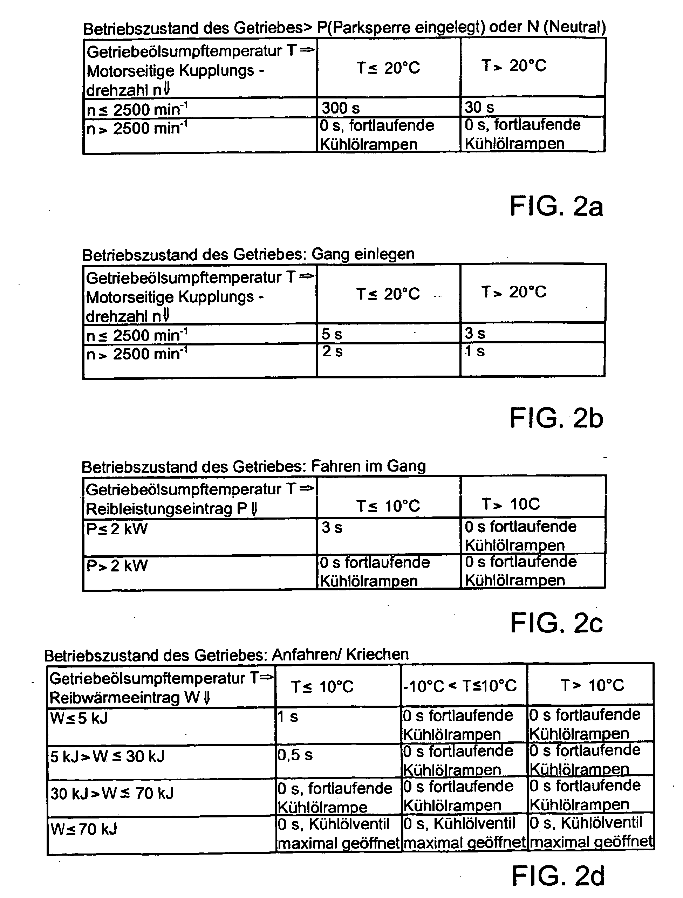

Die Fig. 2a - 2d zeigen in tabellarischer Form für verschiedene Betriebszustände des Getriebes, insbesondere eines Doppelkupplungsgetriebes die entsprechenden Zeitintervalle in denen die Kühlmittelzufuhr in Abhängigkeit der aktuell gemessenen Temperatur T entsprechend unterbrochen wird. In den Darstellungen der Fig. 2a - 2d wird nach Ablauf der Zeitintervalle, die hier größer als "0 s" angegeben sind für vzw. 1 s Kühlmittel zugeführt. Anschließend wird dann die Kühlmittelzufuhr wieder für das angegebene Zeitintervall unterbrochen. Bei den Darstellungen der tabellarischen Form, wo für das Zeitintervall "0 s" eingetragen ist, erfolgt die Kühlmittelzufuhr fortlaufend, insbesondere bei vollständig geöffneten Kühlmittelventil.

Im Ergebnis wird mit dem erfindungsgemäßen Verfahren eine vorteilhafte Kühlmittelzufuhr-Strategie realisiert, die bisher im Stand der Technik bekannten Nachteile vermeidet.

### BEZUGSZEICHENLISTE

- T: Temperatur
- V: Kühlmittelvolumenstrom

## Patentansprüche

1. Verfahren zur Steuerung der Kühlmittelzufuhr einer Kupplung eines Kraftfahrzeuges mit einem automatischen Schaltgetriebe, insbesondere zur Steuerung der Kühlmittelzufuhr einer Doppelkupplung eines automatischen Doppelkupplungsgetriebes, wobei der der Kupplung zugeführte Kühlmittelvolumenstrom (V) in Abhängigkeit der Temperatur (T) des Kühlmittels gesteuert wird, wobei die aktuelle Temperatur (T) des Kühlmittels gemessen wird und wobei die Kühlmittelzufuhr zur Kupplung unterbrochen wird, **dadurch gekennzeichnet, dass** ein Kühlmittelmodulator vorgesehen ist und dass die Kühlmittelzufuhr über die Bestromung des Kühlmittelmodulators realisiert wird, nämlich dass in Abhängigkeit bestimmter innerhalb des Schaltgetriebes durchzuführender Schaltabläufe und in Abhängigkeit der aktuell gemessenen Temperatur (T) des Kühlmittels die Kühlmittelzufuhr zur Kupplung zeitweise unterbrochen wird, wobei die Bestromung rampenförmig oder impulsförmig erfolgt und die Größe des Intervalls, also der bestimmten Zeitspanne, in der die Kühlmittelzufuhr unterbrochen ist, sich im Wesentlichen nach der thermischen Beanspruchung der Kupplungen richtet.

2. Verfahren nach Anspruch 1, **dadurch gekennzeichnet, dass** die Kühlmittelzufuhr bei bestimmten Gangsynchronisierungen zeitweise unterbrochen wird.

3. Verfahren nach Anspruch 1 oder 2, **dadurch gekennzeichnet, dass** die Kühlmittelzufuhr bei Temperaturen (T) des Kühlmittels von weniger als 20 Grad Celsius zeitweise unterbrochen wird.

4. Verfahren nach einem der vorstehenden Ansprüche, **dadurch gekennzeichnet, dass** als Kühlmittel ein Kühlöl verwendet wird und dass das Kühlöl in die Kupplung eingespritzt wird.

5. Verfahren nach einem der vorstehenden Ansprüche, **dadurch gekennzeichnet, dass** die Kühlmittelzufuhr mit Hilfe einer Kühlmittel-Steuereinheit und mindestens eines Einspritzventiles realisiert wird.

6. Verfahren nach einem der vorstehenden Ansprüche, **dadurch gekennzeichnet, dass** die Temperatur (T) des Kühlmittels vor der Kühlmittelzufuhr (V) zur Kupplung gemessen wird.

7. Verfahren nach einem der vorstehenden Ansprüche, **dadurch gekennzeichnet, daß** das Kühlmittel bei niedrigen Temperaturen (T) vorgeheizt wird.

8. Verfahren nach einem der vorstehenden Ansprüche, **dadurch gekennzeichnet, dass** die Kupplung als nasslaufende Reibkupplung ausgeführt ist und die Kupplung kurzzeitig im trockenen Betrieb gefahren wird.

9. Verfahren nach einem der vorstehenden Ansprüche, **dadurch gekennzeichnet, dass** im Betriebszustand "Schalten, Gang einlegen", insbesondere bei stehendem Fahrzeug kurzfristig Kühlmittel in die Kupplung gespritzt wird, um eine Relativbewegung der Getriebeeingangswelle zum entsprechenden Kupplungselement zu realisieren.

10. Verfahren nach einem der vorstehenden Ansprüche, **dadurch gekennzeichnet, dass** die Bestromung im Bereich von 0 bis 1200 mA erfolgt.

11. Verfahren nach einem der vorstehenden Ansprüche, **dadurch gekennzeichnet, daß** ein Kühlmittelrampe im Bereich von 0,5 s bis 1,5 s liegt.

## Claims

1. Method for controlling the coolant supply to a clutch of a motor vehicle having an automatic shift transmission, in particular for controlling the coolant supply to a dual clutch of an automatic dual-clutch transmission, the coolant volume flow rate (V) supplied to the clutch being controlled as a function of the temperature (T) of the coolant, the current temperature (T) of the coolant being measured and the coolant supply to the clutch being interrupted, **characterized in that** a coolant modulator is provided and **in that** the coolant supply is realized by supplying the coolant modulator with electrical current, specifically **in that** the coolant supply to the clutch is interrupted at times as a function of certain shift processes which are to be carried out within the shift transmission and as a function of the current measured temperature (T) of the coolant, the electrical current being supplied in the form of a ramp or pulsed form and the size of the interval, that is to say the certain period of time for which the coolant supply is interrupted, substantially conforming to the thermal loading of the clutches.

2. Method according to Claim 1, **characterized in that** the coolant supply is interrupted at times during certain gear synchronizations.

3. Method according to Claim 1 or 2, **characterized in that** the coolant supply is interrupted at times at coolant temperatures (T) of less than 20 degrees Celsius.

4. Method according to one of the preceding claims, **characterized in that** a cooling oil is used as coolant and **in that** the cooling oil is injected into the clutch.

5. Method according to one of the preceding claims, **characterized in that** the coolant supply is realized by means of a coolant control unit and at least one injection valve.

6. Method according to one of the preceding claims, **characterized in that** the temperature (T) of the coolant is measured upstream of the coolant supply (V) to the clutch.

7. Method according to one of the preceding claims, **characterized in that** the coolant is preheated at low temperatures (T).

8. Method according to one of the preceding claims, **characterized in that** the clutch is embodied as a wet friction clutch and the clutch is driven for a short time in a dry operating mode.

9. Method according to one of the preceding claims, **characterized in that** in the operating state "shifting, engaging gear", in particular when the vehicle is stationary, coolant is briefly injected into the clutch in order to obtain a movement of the transmission input shaft relative to the corresponding clutch element.

10. Method according to one of the preceding claims, **characterized in that** the electrical current is supplied in the range from 0 to 1200 mA.

11. Method according to one of the preceding claims, **characterized in that** a coolant ramp is in the range from 0.5 s to 1.5 s.

## Revendications

1. Procédé de commande de l'alimentation en fluide de refroidissement d'un embrayage d'un véhicule automobile comprenant une boîte de vitesses automatique, notamment pour la commande de l'alimentation en fluide de refroidissement d'un double embrayage d'une boîte de vitesses automatique à double embrayage, dans lequel le débit volumique de fluide de refroidissement (V) acheminé à l'embrayage est commandé en fonction de la température (T) du fluide de refroidissement, la température actuelle (T) du fluide de refroidissement étant mesurée et l'alimentation en fluide de refroidissement à l'embrayage étant interrompue, **caractérisé en ce que** l'on prévoit un modulateur de fluide de refroidissement et **en ce que** l'alimentation en fluide de refroidissement est réalisée par le biais de la mise sous tension du modulateur de fluide de refroidissement, à savoir **en ce qu'**en fonction de déroulements de changement de vitesses spécifiques à effectuer à l'intérieur de la boîte de vitesses, et en fonction de la température (T) actuellement mesurée du fluide de refroidissement, l'alimentation en fluide de refroidissement à l'embrayage est temporairement interrompue et la valeur de l'intervalle, c'est-à-dire de l'intervalle de temps particulier durant lequel l'alimentation en fluide de refroidissement est interrompue, dépend essentiellement de la contrainte thermique des embrayages.

2. Procédé selon la revendication 1, **caractérisé en ce que** l'alimentation en fluide de refroidissement est interrompue temporairement dans le cas de synchronisations de vitesses particulières.

3. Procédé selon la revendication 1 ou 2, **caractérisé en ce que** l'alimentation en fluide de refroidissement est interrompue temporairement pour des températures (T) de fluide de refroidissement inférieures à 20 degrés Celsius.

4. Procédé selon l'une quelconque des revendications précédentes, **caractérisé en ce que** l'on utilise comme fluide de refroidissement une huile de refroidissement et **en ce que** l'huile de refroidissement est injectée dans l'embrayage.

5. Procédé selon l'une quelconque des revendications précédentes, **caractérisé en ce que** l'alimentation en fluide de refroidissement est réalisée à l'aide d'une unité de commande de fluide de refroidissement et d'au moins une soupape d'injection.

6. Procédé selon l'une quelconque des revendications précédentes, **caractérisé en ce que** la température (T) du fluide de refroidissement est mesurée avant l'alimentation en fluide de refroidissement (V) de l'embrayage.

7. Procédé selon l'une quelconque des revendications précédentes, **caractérisé en ce que** le fluide de refroidissement est préchauffé dans le cas de faibles températures (T).

8. Procédé selon l'une quelconque des revendications précédentes, **caractérisé en ce que** l'embrayage est réalisé sous forme d'embrayage à friction humide et l'embrayage est utilisé brièvement en mode sec.

9. Procédé selon l'une quelconque des revendications précédentes, **caractérisé en ce que** dans l'état de fonctionnement "sélection, enclenchement de vitesses", notamment lorsque le véhicule est stationnaire, du fluide de refroidissement est brièvement injecté dans l'embrayage afin de réaliser un mouvement relatif de l'arbre d'entrée de boîte de vitesses par rapport à l'élément d'embrayage correspondant.

10. Procédé selon l'une quelconque des revendications précédentes, **caractérisé en ce que** la mise sous tension s'effectue dans une plage de 0 à 1200 mA.

11. Procédé selon l'une quelconque des revendications précédentes, **caractérisé en ce qu'**une rampe de fluide de refroidissement est située dans la plage de 0,5 s à 1,5 s.
